# EUROPÄISCHE PATENTANMELDUNG

(11) **EP 2 360 542 A1**
(43) Veröffentlichungstag der Anmeldung: **24.08.2011**
(21) Anmeldenummer: 10154270.2
(22) Anmeldetag: 22.02.2010
(51) Int. Cl.: G05B 19/418, H01L 21/00

(54) **Verfahren zum Projektieren eines auf einem Bedien- und Beobachtungsgerät darstellbaren Prozessbildes**

(71) Anmelder: SIEMENS AKTIENGESELLSCHAFT, 80333 München (DE)
(72) Erfinder: Rhein, Bernd, 76870 Kandel (DE)

(57) **Zusammenfassung**

Es wird ein Verfahren zum Projektieren eines auf einem Bedien- und Beobachtungsgerät darstellbaren Prozessbildes (14) mittels eines Engineering-Systems vorgeschlagen, wobei das Prozessbild (14) mehrere Bildobjekte (19 bis 23) umfasst, die Komponenten (17) eines zu steuernden technischen Prozesses repräsentieren und die mittels einer Projektierungs-Software des Engineering-Systems aus Instanzen (25 bis 28) erzeugt werden, welche mittels der Projektierungs-Software jeweils durch Instanziierung eines Typs (1) gebildet werden. Durch geeignete Maßnahmen wird eine eindeutige Zuordnung eines Bildobjekts zu einer Komponente ermöglicht, z. B. einer Komponente in Form eines Transportguts.

## Beschreibung

Die Erfindung betrifft ein Verfahren zum Projektieren eines auf einem Bedien- und Beobachtungsgerät darstellbaren Prozessbildes gemäß dem Oberbegriff des Anspruchs 1. Darüber hinaus betrifft die Erfindung ein Engineering-System gemäß dem Oberbegriff des Anspruchs 3 zur Durchführung des Verfahrens, ein Bedien- und Beobachtungsgerät zur Darstellung eines derart projektierten Prozessbildes und eine Anordnung mit einem derartigen Engineering-System und einem derartigen Bedien- und Beobachtungsgerät.

Aus dem "Siemens-Katalog ST PCS 7", Ausgabe März 2009 ist ein Prozessleitsystem bekannt, welches mindestens ein Bedien- und Beobachtungssystem sowie ein Engineering-System aufweist. Das Bedien- und Beobachtungssystem ist zum Bedienen und Beobachten eines zu steuernden technischen Prozesses bzw. eines Fertigungsablaufs einer Anlage oder einer Maschine vorgesehen, wobei mittels des Engineering-Systems im Rahmen eines Automatisierungsprojektes eine Vielzahl von mehreren Bildobjekten aufweisenden Prozessbildern generiert werden kann, die den zu steuernden technischen Prozess oder Komponenten dieses Prozesses repräsentieren. Das Engineering-System weist dazu eine geeignete Projektierungs-Software auf, mittels der ein Anwender das Prozessbild oder je nach Komplexität einer Anlage eine Vielzahl von Prozessbildern erstellt, wobei diese Bilder gewöhnlich auf einem Runtime-Server gespeichert werden. Ein Bildobjekt eines Prozessbildes wird erstellt, indem die Projektierungs-Software zunächst dem Anwender im Rahmen einer Projektierungsphase eine Vielzahl von in einem Anzeigefeld einer Anzeigeeinheit des Engineering-Systems darstellbaren Basis-Bildobjekten bereitstellt, wobei die Projektierungs-Software jedes Basis-Bildobjekt aus einem Typ erzeugt. Der Anwender wählt schließlich z. B. mittels einer so genannten Maus eines der Basis-Bildobjekte aus und positioniert ein durch die Projektierungs-Software erzeugtes Duplikat in einem weiteren Anzeigefeld der Anzeigeeinheit, wobei die Projektierungs-Software dieses Duplikat durch Instanziierung des Typs des Basis-Bildobjektes bildet, dessen basisparametrierbaren Eigenschaften in diesem Duplikat entsprechend den Parametereingaben des Anwenders geändert werden können. Das Duplikat des positionierten und ggf. mit geänderten Parametern versehenen Basis-Bildobjekts stellt ein Bildobjekt des Prozessbildes dar. Eine Projektierung eines Bildobjekts im Hinblick auf eine mögliche Identifikation dieses Bildobjekts ist nicht vorgesehen. Mit anderen Worten: es ist nicht vorgesehen, ein Bildobjekt für eine eindeutige Zuordnung zu einer Komponente des zu steuernden technischen Prozesses vorzubereiten, z. B. einer Komponente in Form eines Transportguts, welche das Bildobjekt auf der Anzeigeeinheit darstellt.

Der vorliegenden Erfindung liegt die Aufgabe zugrunde, ein Verfahren zum Projektieren eines auf einem Bedien- und Beobachtungsgerät darstellbaren Prozessbildes der eingangs genannten Art anzugeben, mittels dessen ein Bildobjekt zur automatischen Identifikation des Bildobjekts vorbereitet wird. Darüber hinaus ist ein Engineering-System zu schaffen, welches eine derartige Projektierung ermöglicht, und ferner ein Bedien- und Beobachtungsgerät zur Darstellung eines derart projektierten Prozessbildes sowie eine Anordnung, welche während der Steuerung eines technischen Prozesses Bildobjekte des technischen Prozesses automatisch identifiziert.

Im Hinblick auf das Verfahren wird diese Aufgabe durch die im kennzeichnenden Teil des Anspruchs 1, im Hinblick auf das Engineering-System durch die im kennzeichnenden Teil des Anspruchs 3, im Hinblick auf das Bedien- und Beobachtungsgerät durch die im kennzeichnenden Teil des Anspruchs 5 und im Hinblick auf die Anordnung durch die im kennzeichnenden Teil des Anspruchs 7 angegebenen Maßnahmen gelöst.

Vorteilhaft ist, dass ein derart projektiertes Bildobjekt während der Steuerung eines technischen Prozesses eindeutig einer Komponente zugeordnet werden kann, wobei die erfassten und dem Bedien- und Beobachtungsgerät übermittelten Identitätsdaten oder Teile dieser Daten im Rahmen der Anzeige des Prozessbildes in das diese Komponente darstellende Bildobjekt eingeblendet werden können.

In einer Ausgestaltung der Erfindung ist vorgesehen, in der Identifikatoren-Instanz ferner ein Datenfeld zur Aufnahme eines Erfassungs-Orts- und/oder eines Erfassungs-Zeitwertes vorzusehen, wobei die Erfassungs-Orts- und/oder Erfassungs-Zeitwerte während der Steuerung des technischen Prozesses durch das Identitäts-Erfassungsgerät ermittelt und dem Bedien- und Beobachtungsgerät übermittelt werden. Während der Steuerung dieses technischen Prozesses kann dadurch im Prozessbild angezeigt werden, zu welchem Zeitpunkt sich die Komponente an welcher Stelle bzw. Position einer Produktionskette befindet bzw. befand. Darüber hinaus kann eine Meldung ausgelöst werden, wenn die Komponente eine bestimmte Stelle der Produktionskette erreicht.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: einen Identifikatoren-Typ und eine Identifikatoren-Instanz und
- Figur 2: ein Prozessbild einer Transportanlage.

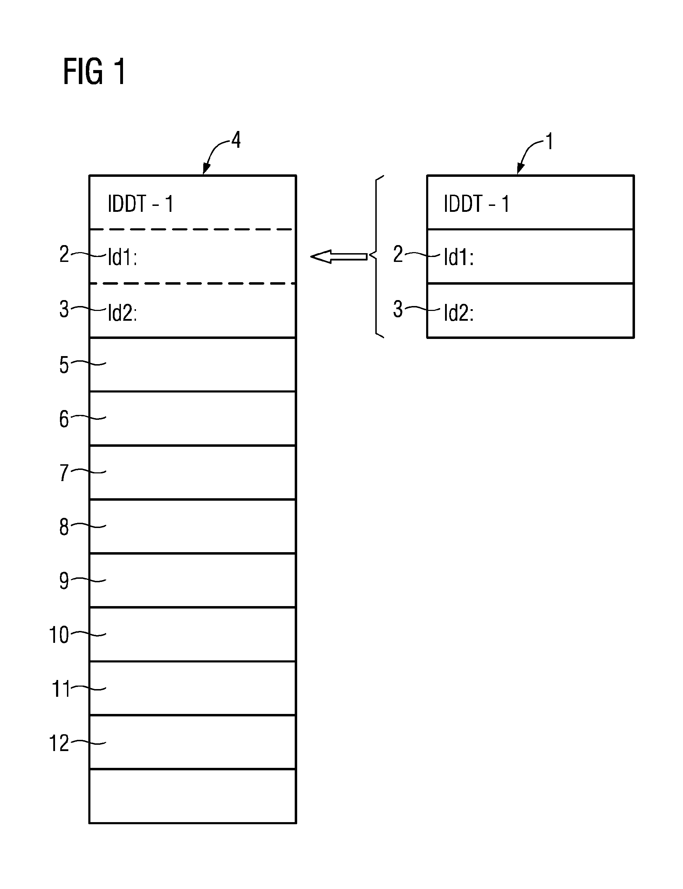

In Figur 1 ist mit 1 ein Identifikatoren-Typ bezeichnet, aus welchem eine Projektierungs-Software eines Engineering-Systems in einem Anzeigefeld einer Anzeigeeinheit des Engineering-Systems ein darstellbares Basis-Bildobjekt erzeugt. Gewöhnlich werden einem Anwender in diesem Anzeigefeld mehrere Basis-Bildobjekte bereitgestellt, wobei jedes Basis-Bildobjekt aus einem Typ erzeugt wird und wobei der Anwender aus der Vielzahl von Basis-Bildobjekten ein Prozessbild erstellt. Das Prozessbild wird erstellt, indem der Anwender im Rahmen einer Projektierungsphase z. B. mittels einer Maus die gewünschten Basis-Bildobjekte auswählt und in ein weiteres Anzeigefeld positioniert. Während des Auswahl- und Positioniervorgangs eines Basis-Bildobjekts erzeugt die Projektierungs-Software durch Instanziierung des Typs des jeweils angewählten Basis-Bildobjektes eine Instanz, aus der die Projektierungs-Software ein Bildobjekt zur Darstellung im Anzeigefeld erzeugt, wobei der Anwender parametrierbare Eigenschaften dieses Typs ändern und/oder ergänzen kann.

Im vorliegenden Beispiel weist der Identifikatoren-Typ 1 einen Typnamen IDDT-1 sowie Identifikatoren 2, 3 auf, von denen der Identifikator 2 beispielsweise zur Hinterlegung eines Komponententyps, z. B. eine Komponente in Form eines Transportbehälters, und der Identifikator 3 zur Hinterlegung einer Komponenten-Seriennummer vorgesehen ist. Für den Fall, dass ein Anwender diesen Identifikatoren-Typ 1 in der beschriebenen Art und Weise auswählt, instanziiert die Projektierungs-Software diesen Typ und erzeugt dadurch eine Identifikatoren-Instanz 4, welche sowohl die Identifikatoren 2, 3 des Identifikatoren-Typs 1 als auch instanzspezifische Datenfelder 5 bis 12 umfasst. Die Datenfelder 5, 6 sind zur Hinterlegung von zu erfassenden Orts- und Zeitwerten vorgesehen, die ein Identitäts-Erfassungsgerät während des Steuerbetriebs einer Visualisierungs-Software eines Bedien- und Beobachtungsgerätes übermittelt, wobei diese Visualisierungs-Software die Werte in die Datenfelder 5, 6 einschreibt. Das Datenfeld 7 dient zur Hinterlegung eines von dem Anwender vorgebbaren bzw. vorgegebenen Anbindungskennzeichens, welches darauf hinweist, mit welchem Identitäts-Erfassungsgerät während der Prozesssteuerung die zu den Identifikatoren 2, 3 des Transportbehälters gehörigen Identitätsdaten zu erfassen sind. In den weiteren Datenfeldern 8, 9, 10, 11 ist hinterlegt, in welcher geometrischen Form, Größe, Farbe und Position der Transportbehälter auf der Anzeigeeinheit darzustellen ist. Ein weiteres Datenfeld 12 dient z. B. - wie im Folgenden noch gezeigt wird - zum Abspeichern einer Triggerbedingung.

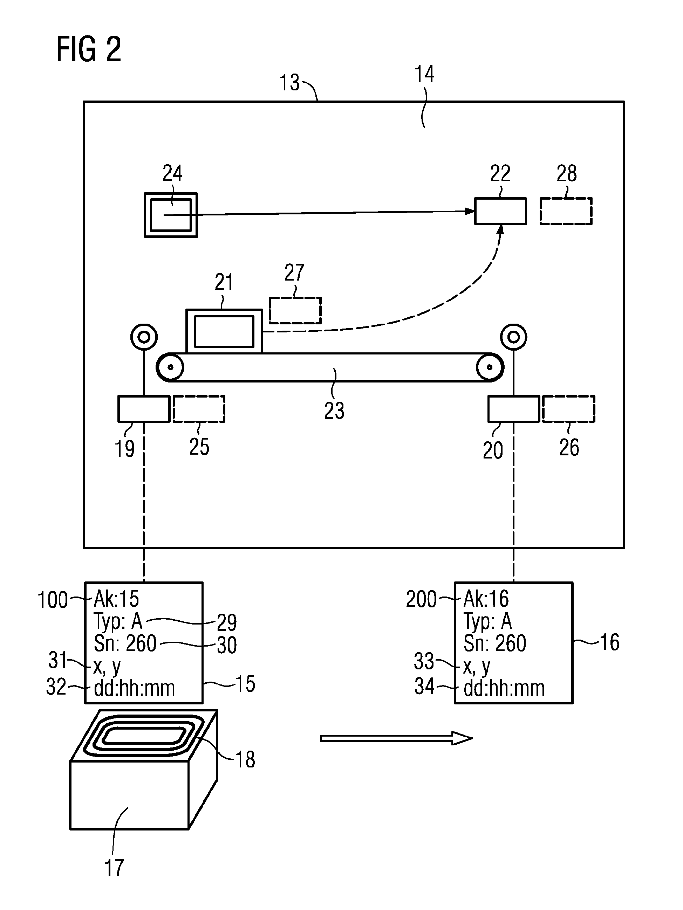

Im Folgenden wird auf Figur 2 verwiesen, in welcher ein auf einer Anzeigeeinheit 13 eines Bedien- und Beobachtungsgerätes dargestelltes Prozessbild 14 gezeigt ist, das in einer stark vereinfachten Form Komponenten einer Transportanlage repräsentiert und welches während einer Projektierungsphase durch einen Anwender mittels eines mit einer Projektierungs-Software versehenen Engineering-Systems erstellt wurde. Das Bedien- und Beobachtungsgerät weist eine Visualisierungs-Software zur Darstellung des Prozessbildes 14 auf und ist Bestandteil eines Prozessleitsystems, welches weitere Bestandteile wie mindestens ein Engineering-System, unterschiedliche Automatisierungsgeräte, ferner Aktoren und Sensoren sowie weitere zur Steuerung der Transportanlage erforderliche Automatisierungskomponenten umfasst, wobei die Teile mindestens über einen Bus miteinander verbunden sind. Die Automatisierungsgeräte können unterschiedlich ausgebildet sein. So sind gewöhnlich Automatisierungsgeräte zur Lösung kleiner, mittlerer und größerer Automatisierungsaufgaben innerhalb der Automatisierungseinrichtung vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Im vorliegenden Beispiel sind der Einfachheit halber lediglich zwei Erfassungsgeräte 15, 16 (Sensoren) dargestellt, welche mit dem Bedien- und Beobachtungsgerät Informationen austauschen. Mittels gestrichelter Linien ist angedeutet, dass die von den Erfassungsgeräten 15, 16 erfassten Daten eines auf einem Transportbehälter 17 angeordneten Transponders 18, z. B. eines RFID-Transponders, dem Bedien- und Beobachtungsgerät übermittelt werden.

Das Prozessbild 14 weist grafische Bildobjekte 19 bis 24 auf, von denen die Bildobjekte 19 bis 22 aus Identifikatoren-Instanzen erzeugt wurden und einen Transportbehälter darstellen. Das Bildobjekt 23 zeigt ein Transportband bzw. ein Förderband und das Bildobjekt 24 ein Bedienelement zum Auslösen einer Funktion. Zum besseren Verständnis der Erfindung sind im vorliegenden Beispiel neben den Bildobjekten 19 bis 22 Identifikatoren-Instanzen 25 bis 28 in gestrichelter Form dargestellt, um anzudeuten, welches Bildobjekt 19 bis 22 aus welcher Identifikatoren-Instanz 25 bis 28 gebildet wurde, wobei angenommen wird, dass die Identifikatoren-Instanzen 25 bis 28 aus dem Identifikatoren-Typ 1 (Figur 1) erzeugt wurden und dass in der Identifikatoren-Instanz 25 ein Anbindungskennzeichen 100 und in der Identifikatoren-Instanz 26 ein Anbindungskennzeichen 200 hinterlegt wurde.

Für den Fall, dass der Transportbehälter 17 das Erfassungsgerät 15 passiert, erfasst dieses Erfassungsgerät 15 die auf dem Transponder 18 hinterlegten Identitätsdaten 29, 30 der Identifikatoren 2, 3 (beispielsweise Transportbehälter-Typ = A; Seriennummer des Transportbehälters = 260) und übermittelt diese Identitätsdaten zusammen mit einem Anbindungskennzeichen des Erfassungsgerätes 15 dem Bedien- und Beobachtungsgerät. Es wird angenommen, dass das übermittelte Anbindungskennzeichen dem in der Identifikatoren-Instanz 25 hinterlegten Anbindungskennzeichen 100 entspricht. Die Visualisierungs-Software des Bedien- und Beobachtungsgerätes erkennt aufgrund dieses Anbindungskennzeichens 100, dass die Identitätsdaten 29, 30 der Identifikatoren 2, 3 in die dem Bildobjekt 19 zugehörige Identifikatoren-Instanz 25 einzuschreiben sind, welche - wie beschrieben - im Rahmen der Projektierungsphase zur Erstellung des Prozessbildes 14 aus dem Identifikatoren-Typ 1 erzeugt und in der dieses Anbindungskennzeichen hinterlegt wurde. Ferner übermittelt das Erfassungsgerät 15 dem Bedien- und Beobachtungsgerät Erfassungs-Orts- und Erfassungs-Zeitwerte 31, 32, welche die Visualisierungs-Software in die dafür vorgesehenen Datenfelder der Identifikatoren-Instanz 25 hinterlegt und welche die aktuelle Position des Transportbehälters und den Zeitpunkt der Erfassung des Behälters darstellen. Die Einträge der den Identifikatoren 2, 3 zugehörigen Identitätsdaten 29, 30 und der Orts- und Zeitwerte 31, 32 in die Identifikatoren-Instanz 25 bedeuten, dass diese ursprünglich im Hinblick auf die Identitätsdaten der Identifikatoren 2, 3 sowie Orts- und Zeitwerte "leere" Identifikatoren-Instanz 25 gefüllt wird. Dadurch erhält diese Identifikatoren-Instanz 25 sowie das aus dieser Instanz 25 erzeugte Bildobjekt 19 einen Bezug zur realen Welt, wobei dem Anwender im Bildobjekt sowohl die Identitätsdaten 29, 30 als auch die Orts- und Zeitwerte 31, 32 im Bildobjekt 19 angezeigt werden.

Nachdem der Transportbehälter 17 das Erfassungsgerät 15 passiert hat, wird dieser auf dem Transportband weiterbewegt, was die Bildobjekte 21 und 23 anzeigen. Die Visualisierungs-Software ist derart ausgebildet, dass diese automatisch in die Instanz 27, aus welcher das Bildobjekt 21 erzeugt wurde, die Identitätsdaten 29, 30 der Identifikatoren 2, 3 einträgt, das Bildobjekt 21 aktualisiert und Identitätsdaten 29, 30 im Bildobjekt 21 anzeigt. Ferner schreibt die Visualisierungs-Software die mit einer ersten und einer zweiten Ergänzungskennung versehenen Orts- und Zeitwerte 31, 32 in die Instanz 27, wobei diese Orts- und Zeitwerte 31, 32 und diese Ergänzungskennungen ebenfalls im Bildobjekt 21 angezeigt werden. Dadurch zeigen die Bildobjekte 21, 23 dem Anwender an, dass der Transportbehälter mit den Identitätsdaten 29, 30 zum Zeitpunkt 32 die Position 31 (Startposition des Transportbandes) durchlaufen hat und dass sich dieser (identifizierte) Transportbehälter auf dem Transportband weiterbewegt, wobei die erste (unbestimmte) Ergänzungskennung lediglich darauf hinweist, dass die aktuelle Position des Transportbehälters von der Startposition abweicht, und wobei ferner die zweite (unbestimmte) Ergänzungskennung darauf hinweist, dass der aktuelle Zeitpunkt vom Zeitpunkt 32, d. h. vom Zeitpunkt der Erfassung der Identitätsdaten 29, 30 durch das Erfassungsgerät 15, abweicht. Die Visualisierungs-Software ist ferner derart ausgebildet, dass diese für den Fall, dass der Anwender das Bildobjekt 24 berührt und somit einen "Trigger durch Bedienung" auslöst, die in der Instanz 25 bzw. 27 hinterlegten Identitätsdaten 29, 30, Orts- und/oder Zeitwerte 31, 32 und/oder erste und zweite Ergänzungskennung in die Instanz 28 einschreibt. Diese Instanz 28 dient als Archivierungsinstanz, die nach jeder Berührung des Bildobjekts 24 aktualisiert und in ein Archiv hinterlegt wird. Dadurch wird ermöglicht, zu einem späteren Zeitpunkt die Bewegung eines mit Identitätsdaten versehenen Transportbehälters zu reproduzieren und grafisch darzustellen.

Für den Fall, dass der Transportbehälter 17 schließlich das Ende des Transportbands erreicht, passiert dieser schließlich das Erfassungsgerät 16. Dieses erfasst ebenfalls die auf dem Transponder 18 hinterlegten Identitätsdaten 29, 30 der Identifikatoren 2, 3 und übermittelt diese Identitätsdaten 29, 30 zusammen mit einem Anbindungskennzeichen des Erfassungsgerätes 16 dem Bedien- und Beobachtungsgerät. Für den Fall, dass dieses Anbindungskennzeichen dem in der Identifikatoren-Instanz 26 hinterlegten Anbindungskennzeichen 200 entspricht, schreibt die Visualisierungs-Software die Identitätsdaten 29, 30 der Identifikatoren 2, 3 in die dem Bildobjekt 20 zugehörige Identifikatoren-Instanz 26 ein. Darüber hinaus übermittelt das Erfassungsgerät 16 dem Bedien- und Beobachtungsgerät aktuelle Erfassungs-Orts- und Erfassungs-Zeitwerte 33, 34, welche die Visualisierungs-Software in die dafür vorgesehenen Datenfelder der Identifikatoren-Instanz 26 hinterlegt. Die Visualisierungs-Software aktualisiert daher das aus der Instanz 26 erzeugte Bildobjekt 20 und dem Anwender werden im Bildobjekt 20 sowohl die Identitätsdaten 29, 30 als auch die Orts- und Zeitwerte 33, 34 im Bildobjekt 20 angezeigt.

Durch die Erfindung wird im Rahmen der Automatisierungstechnik ermöglicht, grafisch darzustellen, zu welchem Zeitpunkt ein Objekt X bzw. welches Objekt sich an einer Stelle Y der Produktionskette befindet oder befand. Darüber hinaus kann erkannt werden, welchen Weg das Objekt X in der Produktionskette genommen hat. Ferner kann eine Meldung bzw. ein Trigger ausgelöst werden, wenn das Objekt X die Stelle Y der Produktionskette erreicht hat.

## Patentansprüche

1. Verfahren zum Projektieren eines auf einem Bedien- und Beobachtungsgerät darstellbaren Prozessbildes (14) mittels eines Engineering-Systems, wobei das Prozessbild (14) mehrere Bildobjekte (19 bis 23) umfasst, die Komponenten (17) eines zu steuernden technischen Prozesses repräsentieren und die mittels einer Projektierungs-Software des Engineering-Systems aus Instanzen (25 bis 28) erzeugt werden, welche mittels der Projektierungs-Software jeweils durch Instanziierung eines Typs (1) gebildet werden, **dadurch gekennzeichnet, dass**
- mindestens ein Typ in Form eines Identifikatoren-Typs (1) vorgesehen wird, wobei dieser Identifikatoren-Typ (1) mindestens einen Identifikator (2, 3) einer dieser Komponenten (17) des zu steuernden technischen Prozesses beschreibt,
- in eine aus dem Identifikatoren-Typ (1) gebildete Identifikatoren-Instanz (25 bis 28) ein Anbindungskennzeichen (100, 200) eingetragen wird, das anzeigt, von welchem Identitäts-Erfassungsgerät (15, 16) während der Steuerung des technischen Prozesses zu dem mindestens einen Identifikator (2, 3) dieser einen Komponente (7) gehörige Identitätsdaten (29, 30) zu erfassen sind.

2. Verfahren nach Anspruch 1, **dadurch gekennzeichnet, dass** die Identifikatoren-Instanz (IDO) ferner mit einem Datenfeld (5, 6) zur Aufnahme eines Erfassungs-Orts- und/oder eines Erfassungs-Zeitwertes (31, 32, 33, 34) versehen ist, wobei die Erfassungs-Orts- und/oder die Erfassungs-Zeitwerte während der Steuerung des technischen Prozesses durch das Identitäts-Erfassungsgerät (15, 16) ermittelt und dem Bedien- und Beobachtungsgerät übermittelt werden.

3. Engineering-System, welches zum Projektieren eines auf dem Bedien- und Beobachtungsgerät darstellbaren Prozessbildes (14) vorgesehen ist, wobei das Prozessbild (14) mehrere Bildobjekte (19 bis 23) umfasst, die Komponenten (7) eines zu steuernden technischen Prozesses repräsentieren und die eine Projektierungs-Software des Engineering-Systems während einer Projektierungsphase aus Instanzen (25 bis 28) erzeugt, welche die Projektierungs-Software jeweils durch Instanziierung eines Typs (1) bildet, **dadurch gekennzeichnet, dass** die Projektierungs-Software dazu ausgebildet ist,
- zur Projektierung einer Identifikatoren-Instanz (25 bis 28) einen Identifikatoren-Typ (1) vorzusehen, wobei dieser Identifikatoren-Typ (1) mindestens einen Identifikator (2, 3) mindestens einer der Komponenten (7) des zu steuernden technischen Prozesses beschreibt, und
- in eine aus dem Identifikatoren-Typ (1) gebildete Identifikatoren-Instanz (25 bis 28) ein Anbindungskennzeichen (100, 200) einzutragen, das anzeigt, mittels welchem Identitäts-Erfassungsgerät (15, 16) während der Prozesssteuerung zu dem mindestens einen Identifikator dieser mindestens einen Komponente gehörige Identitätsdaten zu erfassen sind.

4. Engineering-System nach Anspruch 3, **dadurch gekennzeichnet, dass** die Projektierungs-Software dazu ausgebildet ist, die Identifikatoren-Instanz (25 bis 28) ferner mit einem Datenfeld zur Aufnahme eines Erfassungs-Orts- und/oder eines Erfassungs-Zeitwertes (31 bis 34) zu versehen, wobei das Identitäts-Erfassungsgerät (15, 16) die Orts- und/oder Zeitwerte (31 bis 34) während der Steuerung des technischen Prozesses ermittelt und dem Bedien- und Beobachtungsgerät übermittelt.

5. Bedien- und Beobachtungsgerät zur Darstellung eines mittels eines Engineering-Systems nach Anspruch 3 oder 4 projektierten, mindestens ein Bildobjekt (19 bis 23) aufweisenden Prozessbildes (14), **dadurch gekennzeichnet, dass** während der Steuerung eine Visualisierungs-Software des Bedien- und Beobachtungsgeräts die von einem Identitäts-Erfassungsgerät (15, 16) erfassten Identitätsdaten (29, 30) in eine Identifikatoren-Instanz (25 bis 28), aus welcher das Bildobjekt (19 bis 22) erzeugt ist, einschreibt und dass die Visualisierungs-Software das aus dieser Identifikatoren-Instanz (25 bis 28) erzeugte Bildobjekt (19 bis 22) aktualisiert.

6. Bedien- und Beobachtungsgerät nach Anspruch 5, wobei das Identitäts-Erfassungsgerät Erfassungs-Orts- und/oder Erfassungs-Zeitwerte (31 bis 34) während der Steuerung des technischen Prozesses dem Bedien- und Beobachtungsgerät übermittelt und die Visualisierungs-Software die Erfassungs-Orts-und/oder Erfassungs-Zeitwerte (31 bis 34) in die Identifikatoren-Instanz (25 bis 28) einschreibt.

7. Anordnung mit einem Bedien- und Beobachtungsgerät und einem Engineering-System, welches zum Projektieren eines auf dem Bedien- und Beobachtungsgerät darstellbaren Prozessbildes (14) vorgesehen ist, wobei das Prozessbild (14) mehrere Bildobjekte (19 bis 23) umfasst, die Komponenten (7) eines zu steuernden technischen Prozesses repräsentieren und die eine Projektierungs-Software des Engineering-Systems während einer Projektierungsphase aus Instanzen (25 bis 28) erzeugt, welche die Projektierungs-Software durch Instanziierung eines Typs (1) bildet, **dadurch gekennzeichnet, dass**
- die Projektierungs-Software dazu ausgebildet ist, zur Projektierung einer Identifikatoren-Instanz (25 bis 28) einen Identifikatoren-Typ (1) vorzusehen, wobei dieser Identifikatoren-Typ (1) mindestens einen Identifikator (2, 3) mindestens einer der Komponenten (7) des zu steuernden technischen Prozesses beschreibt,
- die Projektierungs-Software ferner dazu ausgebildet ist, in eine aus dem Identifikatoren-Typ (1) gebildete Identifikatoren-Instanz (25 bis 28) ein Anbindungskennzeichen (100, 200) einzutragen, das anzeigt, mittels welchem Identitäts-Erfassungsgerät (15, 16) während der Prozesssteuerung zu dem mindestens einen Identifikator (2, 3) dieser mindestens einen Komponente (7) gehörige Identitätsdaten (29, 30) zu erfassen sind,
- die Anordnung ferner mit einem Identitäts-Erfassungsgerät (15, 16) versehen ist, welches während der Prozesssteuerung die Identitätsdaten (29, 30) erfasst und dem Bedien-und Beobachtungsgerät übermittelt, wobei eine Visualisierungs-Software des Bedien- und Beobachtungsgeräts die erfassten Identitätsdaten (29, 30) in die Identifikatoren-Instanz (25 bis 28) einschreibt und das aus dieser Identifikatoren-Instanz (25 bis 28) erzeugte und dargestellte Bildobjekt (19 bis 22) aktualisiert.

8. Anordnung nach Anspruch 7, **dadurch gekennzeichnet, dass** die Projektierungs-Software dazu ausgebildet ist, die Identifikatoren-Instanz (25 bis 28) ferner mit einem Datenfeld (5, 6) zur Aufnahme eines Erfassungs-Orts- und/oder eines Erfassungs-Zeitwertes (31 bis 34) zu versehen, wobei das Identitäts-Erfassungsgerät die Erfassungs-Orts- und/oder Erfassungs-Zeitwerte während der Steuerung des technischen Prozesses ermittelt und dem Bedien- und Beobachtungsgerät übermittelt, welches die Orts- und/oder Zeitwerte (31 bis 34) in die Identifikatoren-Instanz (25 bis 28) einschreibt.

9. Anordnung nach Anspruch 8, **dadurch gekennzeichnet, dass** die Visualisierungs-Software die Identifikatoren-Instanz (25 bis 28) in einem Identitäts-Archiv hinterlegt.

10. Anordnung nach einem der Ansprüche 7 bis 9, **dadurch gekennzeichnet, dass** das Identitäts-Erfassungsgerät (15, 16) ein RFID-Lesegerät ist, welches die in einem Transponder (18) hinterlegten Identitätsdaten (29, 30) ausliest.

11. Anordnung nach Anspruch 7 bis 10, **dadurch gekennzeichnet, dass** die Anordnung mit einem Archiv zum Speichern der erfassten Identitätsdaten (29, 30) versehen ist.
